# EUROPEAN PATENT SPECIFICATION

(11) **EP 0 822 244 B1**
(45) Date of publication and mention of the grant of the patent: **16.08.2001**
(21) Application number: 97112990.3
(22) Date of filing: 29.07.1997
(51) Int. Cl.: C09J 151/06

(54) **Process for gluing footwear parts by hot application of adhesives on uppers, innersoles, or soles**
Verfahren zum Verkleben von Schuhteilen durch heisse Anwendung von Klebstoff auf Sohlen, Innersohlen und Oberteil
Procédé pour coller des parties de chaussures par application chaude d'adhésif sur les semelles, tiges et semelles intérieures

(30) Priority: 31.07.1996 IT MI961654
(43) Date of publication of application: 04.02.1998
(73) Proprietor: BASELL NORTH AMERICA INC., Wilmington Delaware 19850-5439 (US)
(72) Inventor: Scanavini, Luca, 44100 Ferrara (IT); Ottaviani, Gino, 60041 Sassoferrato, Ancona (IT); Bacci, Dino, 30170 Pordenone (IT)
(74) Representative: Gaverini, Gaetano

(56) References cited:
- EP-A- 0 370 793
- EP-A- 0 501 762
- DE-A- 4 308 591

## Description

The present invention concerns a process for gluing footwear parts by hot application of hot melt polyolefin adhesives on footwear's uppers, innersoles, or soles.

In order to better understand the final objectives and advantages of the process of the invention, one must first mention the operating techniques used to manufacture traditional footwear, i.e., the ones where the upper is attached to the sole by way of gluing and/or sewing.

First of all it must be pointed out that footwear can be divided in two major categories: those referred to as "assembled", and those referred to as "tubular", more commonly known as moccasins.

In close footwear of the "assembled" type, the upper part covers the tip, heel, and instep, and progresses downwards laterally to be then tucked in and secured under the edges of the innersole. In the moccasin, on the other hand, the upper part covers the sole of the foot, and progresses upwards surrounding the heel and sides of the foot until it meets on the instep of the foot either directly or by way of a connecting piece called vamp.

Because of this characteristic, the moccasin does not have the above mentioned innersole, which is an indispensable and typical component of "assembled" footwear.

The attachment of the upper to the sole, for both assembled and moccasin types footwear, has always been done by gluing, using special mastics in the liquid state, which are applied cold to the underside of the innersole, usually by using a brush or rollers, or should there be no innersole, such as in the case of moccasins, said mastics are applied directly on the underside of the upper. In certain cases some prefer to apply the mastic also on the upper side of the sole, where at any rate the innersole or tubular upper must be kept flat for some time against said sole in order for the surfaces that are pressed against one another to adhere in a secure and resistant manner.

To ensure a better hold, sometimes the upper is also stitched to the bottom with a seam that goes along the perimeter, and this is carried out either manually or by using special sewing machines.

This stitching operation requires time and specialized labor; therefore, it is used only by a few shoe manufacturers that specialize in the production of high quality and high priced footwear, while in the overwhelming majority of footwear the upper is attached to the sole only by gluing the parts together.

The kind of soles that are generally used for this type of inexpensive or moderately priced footwear have raised ridges with what looks like stitches in order to give the impression that the sole and upper are joined by real stitches along the perimeter, such as the ones that characterize high class footwear.

In order to reduce production time, and consequently costs, some special hot-application adhesives were introduced in the market. Said adhesives have a reaction times definitely lower than the ones of the normal adhesive used to date, and are generally made of high fluidity copolymers of various types.

One must remember that the adhesives presently used require that the parts are joined together and pressed only after the adhesive has dried; in addition, certain types of adhesives require that once the layer of adhesive has dried, it must be brought to the right reactivation temperature with the use of special ovens; therefore, the phase where the parts are pressed together must be carried out only after said reheating.

On the other hand, the recent category of adhesives mentioned above that are applied hot is characterized by the fact that their efficacy is subject to the condition that the surfaces to be joined must be put in contact to one another before the layer of adhesive solidifies, which means that the times used to apply the adhesive on the surfaces to be treated must be reduced to a minimum, in order to prevent the cooling down process from starting when the parts to be glued are not yet joined together and pressed.

For this reason, sophisticated hot-application machines have been designed to be used with the above mentioned quick-setting adhesives. Said machines use high-velocity movable dispensing nozzles, in particular spraying nozzles, with a great degree of precision, capable of following predetermined trajectories that have been programmed into a computer, which in turn manages and controls the accurate operation of these machines.

In spite of the help of said machines for the automatic hot dispensing of adhesives, to date there has been no one who has perfected a process that can resolve the drawbacks that are common to footwear whose upper and sole have been joined by using a hot adhesive applied with the above mentioned automatic machines. Basically said drawbacks are of two types, the first consists of burrs of adhesive all along the perimeter between the upper and the sole of the footwear, and the second consists of poor adhesion of the upper to the sole along their perimeter, in which case the edges tend to open up as soon as they are subjected to stress.

Both drawbacks derive from the difficulty of measuring, in an adequate manner, the flow of the adhesive being distributed by the nozzles during their very fast application operation: it must be pointed out that for each operating cycle said nozzles cover a complete predetermined path which has the same profile as the outer edge of the sole or upper that is to be covered with the adhesive.

More precisely, the first of the two drawbacks mentioned above is clearly due to an excessive flow of adhesive, which may have been selected with the intent of preventing and eliminating the risk of easy ungluing along the perimeter where the sole meets the upper; the second problem, on the other hand, is obviously due to an insufficient flow of adhesive, caused by the preoccupation with avoiding the formation of burrs along the perimeter where the sole meets the upper.

The Applicant has now devised a process for gluing footwear parts comprising the hot application, on footwear's uppers, innersoles, or soles, of a hot melt adhesive comprising (percentages by weight):
I) from 95 to 99.5% of an heterophasic composition comprising:
   A) from 20% to 60% of a homopolymer of propylene, or one or more crystalline copolymers of propylene, preferably containing 80% or more propylene, or mixtures of the above mentioned (co)polymers;
   B) from 0% to 25%, preferably from 1% to 20%, of an ethylene copolymer insoluble in xylene at ambient temperature (25°C) ;
   C) from 15% to 80% of an olefin copolymer fraction, soluble in xylene at ambient temperature;
II) from 0.5% to 5% of a polar monomer, preferably maleic anhydride, isophoronebismaleamic acid, or acrylic acid, grafted to the composition (I).

The hot melt adhesive is particularly suited for use in the industrial production of footwear, as it can be easily applied to the footwear parts.

In fact said adhesive have a good fluidity at the temperatures used in the industrial machines for hot application, and make it possible to operate the subsequent step of joining the footwear parts before undergoing the cooling down process to an appreciable degree.

Moreover they provide a firm adhesion between leather parts and polyolefin parts (for instance polyolefin soles).

The heterophasic composition (I) can be prepared by mixing, in the molten or softened state, the components (A), (B) and (C).

The adhesive can also be prepared by mixing, in the molten or softened state, the component (A) and an elastomeric or elastomeric thermoplastic olefin copolymer, which can be totally soluble in xylene at ambient temperature (in which case it constitutes component (C), so that no component (B) is present), or partially soluble in xylene at ambient temperature (in which case the insoluble part constitutes the component (B)).

Preferably the said elastomeric or elastomeric thermoplastic olefin copolymer is selected from the group consisting of copolymers of ethylene with one or more C₃-C₁₀ α-olefins containing from 15 to 90% by weight, preferably from 20 to 80% by weight of ethylene and optionally from 1 to 10% by weight of a diene, and containing from 0 to 60%, preferably from 0 to 50% by weight, in particular from 0 to 30% by weight, of a fraction insoluble in xylene at 25°C (and from 100 to 40%, preferably from 100 to 50%, in particular from 100 to 70% by weight of a fraction totally soluble in xylene at 25°C).

Said copolymers can be prepared by using Ziegler-Natta (Ti-or V-based) catalysts or metallocene catalysts.
The heterophasic composition (I) can also be prepared by way of sequential polymerization in two or more stages using highly stereospecific Ziegler-Natta catalysts.
Component (A) is generally formed in the first polymerization stages, while components (B) and (C) are formed during one or more subsequent polymerization stages.

A further purpose of the present invention is to devise a process for the hot application of hot melt adhesives, using automatic machines, that will not cause the previously mentioned drawbacks.

The said process provides that for each operation cycle two layers of adhesive are to be applied on the surface to be treated along two concentric perimetric bands; the first layer, of low consistency, applied to the outermost band of the perimeter, and the second layer, of high consistency, applied to the innermost band.

A "low consistency layer" is a layer obtained by applying a quantity of adhesive less than or equal to 5 g, from 2 to 5 g for example, while a "high consistency layer" is a layer obtained by applying a quantity of adhesive greater than or equal to 15 g, from 15 to 50 g for example.

What happens is that during the phase where the two parts are pressed together the adhesive that is applied to the innermost band, due to the pressure exerted, gets thinner and spreads to the outermost perimeter band, where, as already mentioned, there is a significantly smaller quantity of adhesive than the one applied to the innermost perimeter band.

Due to this, the low consistency of the layer of adhesive applied to the outer band is compensated by the excess coming from the abundant layer of adhesive applied on the band of the innermost perimeter, thus guaranteeing a strong and resistant bonding of the outer edges of the sole and upper in spite of the small quantity of adhesive applied along said edges, which in turn guarantees that no unsightly burrs of adhesive exude from the edges of the sole and upper.

Moreover, regardless of how big and consistent the burrs originating from the abundant layer of adhesive applied to the innermost perimeter band are, they never extend beyond the outside perimeter band to reach the outer part of the sole and upper edges.

Particularly suited for the use with the present invention is a hot melt adhesive comprising (percentages by weight):
I) from 95% to 99.5% of a heterophasic composition comprising:
   A) from 20% to 60% of homopolymer polypropylene with an isotactic index greater than 80 (percentage by weight of the fraction insoluble in boiling n-heptane), or one or more crystalline copolymers of propylene with ethylene and/or one or more α-olefins having 4-10 carbon atoms, containing 80% or more propylene, or mixtures of the above mentioned (co)polymers;
   B) from 0% to 25%, preferably from 1% to 20%, of an ethylene copolymer insoluble in xylene at ambient temperature (25°C) ;
   C) from 15% to 80% of a copolymer fraction of ethylene with propylene and/or an α-olefin having 4-10 carbon atoms, and optionally a diene, containing 20-60% ethylene, and completely soluble in xylene at ambient temperature;
II) from 0.5% to 5% of a polar monomer, preferably maleic anhydride, isophoronebismaleamic acid, or acrylic acid, grafted to the composition (I).

Preferably, when present in the composition (I), the copolymer B) contains from 0.5% to 5% by weight of propylene and/or α-olefins having 4-10 carbon atoms.

In the case where fraction (C) comprises a diene, the latter is present in quantities preferably less than or equal to 10% by weight. Preferred examples of dienes are: 1,4-hexadiene; dicyclopentadiene; 2-ethylidene-5-norbornene.

Preferred examples of α-olefins having 4-10 carbon atoms that can be present in (A), (B), and (C), are 1-butene, 4-methyl-1-pentene, and 1-hexene.

The grafting of polar monomer (II) can be obtained by way of known methods, mixing, in an extruder for example, heterophasic composition (I) in the molten state and polar monomer (II), preferably in the presence of radical initiators, such as organic peroxides.

It is also possible to introduce already grafted polar monomer (II), by previously grafting it, for example, to an adequate quantity of the polymer constituting the component (A) of composition (I), and then blending the product thus obtained to the remaining portion of composition (I).

Preferably the above mentioned hot melt adhesives have Melt Flow Rate values, measured according to ASTM D 1238, condition L, ranging from 50 to 300 g/10 minutes.

Moreover, preferably said adhesives have a density lower than 1g/cm³.

The above mentioned Melt Flow Rate values can optionally be obtained by way of radical visbreaking of the hot melt adhesive by using organic peroxides, for example, and operating according to known techniques.

Said hot melt adhesives are generally applied to the uppers or soles after having been brought to a temperature ranging from 240°C and 300°C.

For a better understanding, the description of the process of the invention is further demonstrated in the attached drawings, which are given in order to exemplify and not limit said process, where:

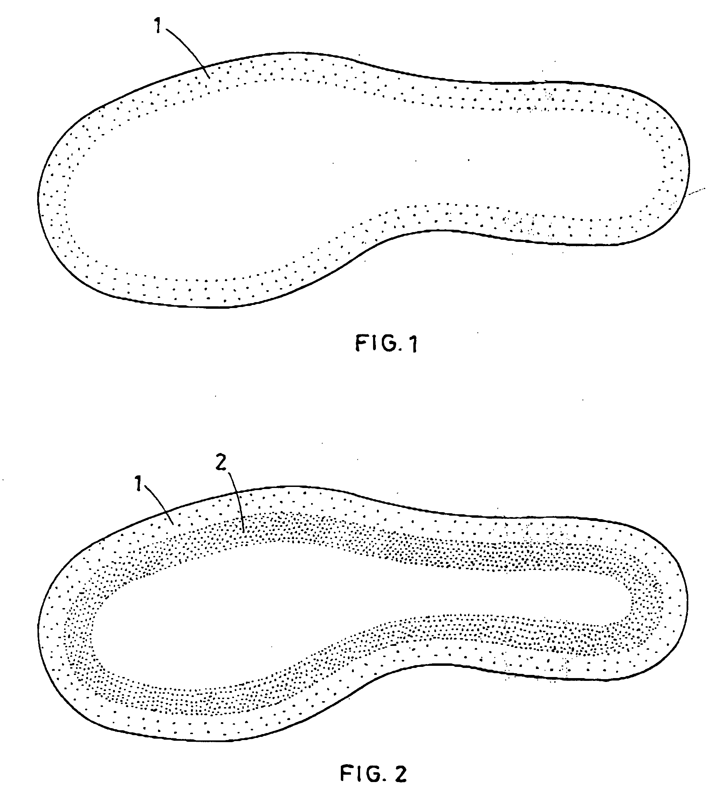

- figure 1 shows the drawing of a sole on which has been applied the first layer of adhesive corresponding to the outermost band of the perimeter;
- figure 2 shows the sole of figure 1, on which the second layer of adhesive has been applied along the innermost band of the perimeter.

With reference to the above mentioned figures the process according to the invention comprises the following operating phases, which can be carried out either in the order listed below, or in reverse order:
- hot application of a low consistency layer (1) of adhesive along the outer perimeter band of the sole;
- hot application of a high consistency layer (2) of adhesive along the inner perimeter band of the sole, concentric and adjacent to the band on which the layer (1) has been applied.

It is also possible to apply both layers (1) and (2) simultaneously on the above mentioned concentric perimeter bands.

It is obvious that in the case where the process is carried out on a sole, as indicated above, the surface on which the adhesive is applied is on the upper part of the sole, whereas when the process is carried out on the upper of either the tubular or the assembled type, said surface will coincide with the underside of the upper or of the innersole.

As mentioned above, it is of no importance which of the two layers of adhesive is applied first, as long as the operating cycle occurs in a time which is sufficiently short to ensure that the cooling process of both layers has not yet substantially begun at the end of the application of the second layer of adhesive.

Preferably the temperature of the adhesive must not drop below 200°C by the time all the adhesive (for instance both the above said layers (1) and (2)) have been applied.

The time within which the deposition of the adhesive must be carried out in order to ensure that the cooling process has not yet substantially begun, in particular to ensure that the temperature of the adhesive does not drop below 200°C can be easily determined by experimentation.

## Claims

1. A process for gluing footwear parts comprising the hot application, on footwear's uppers, innersoles, or soles, of a hot melt adhesive comprising (percentages by weight):
I) from 95 to 99.5% of a heterophasic composition comprising:
A) from 20% to 60% of a homopolymer of propylene, or one or more crystalline copolymers of propylene, or mixtures of the above mentioned (co)polymers;
B) from 0% to 25%, of an ethylene copolymer insoluble in xylene at ambient temperature (25°C) ;
C) from 15% to 80% of an olefin copolymer fraction, soluble in xylene at 25°C;
II) from 0.5% to 5% of a polar monomer, grafted to the composition (I).

2. The process of claim 1 , carried out by using automatic machines, comprising the following operating phases carried out either in sequence or simultaneously:
a) hot application of a low consistency layer (1) of the adhesive along the outer perimeter band of footwear's upper, innersole, or sole;
b) hot application of a high consistency layer (2) of the adhesive along the concentric perimeter inner band, right inside the layer (1) of adhesive;
where operating phases a) and b) are carried out in a sufficiently short time in order to ensure that neither layer (1) or (2) substantially begin the cooling down process, layer (1) is obtained by applying a quantity of adhesive less than or equal to 5 g, and layer (2) is obtained by applying a quantity of adhesive greater than or equal to 15 g.

3. The process of claims 1 and 2, where the adhesive used is a hot melt adhesive comprising (percentages by weight):
I) from 95% to 99.5% of a heterophasic composition comprising:
A) from 20% to 60% of homopolymer polypropylene with an isotactic index greater than 80 (percentage by weight of the fraction insoluble in boiling n-heptane), or one or more crystalline copolymers of propylene with ethylene and/or one or more α-olefins having 4-10 carbon atoms, containing 80% or more propylene, or mixtures of the above mentioned (co)polymers;
B) from 0% to 25% of an ethylene copolymer insoluble in xylene at ambient temperature (25°C) ;
C) from 15% to 80% of a copolymer fraction of ethylene with propylene and/or an α-olefin having 4-10 carbon atoms, and optionally a diene, containing 20-60% ethylene, and completely soluble in xylene at 25°C;
II) from 0.5% to 5% of a polar monomer grafted to the composition (I).

## Patentansprüche

1. Verfahren zum Kleben von Schuhwerkteilen, umfassend die Heissapplikation auf das Oberleder, die Innensohlen oder Sohlen von Schuhwerk von einem Schmelzkleber, der umfaßt (Gewichtsprozente):
I) 95 bis 99,5% einer heterophasischen Zusammensetzung, umfassend
A) 20 bis 60% eines Homopolymeren von Propylen oder eines oder mehrerer kristalliner Copolymere von Propylen oder Mischungen der vorstehenden (Co)Polymeren;
B) 0 bis 25% eines in Xylol bei Raumtemperatur (25°C) unlöslichen Ethylencopolymeren;
C) 15 bis 80% einer in Xylol bei 25°C löslichen Olefincopolymerfraktion;
II) 0,5 bis 5% eines auf die Zusammensetzung (I) gepfropften polaren Monomeren.

2. Verfahren gemäß Anspruch 1, durchgeführt unter Verwendung automatischer Maschinen, umfassend die folgenden Arbeitsphasen, die entweder nacheinander oder gleichzeitig durchgeführt werden:
a) die Heissapplikation einer Schicht (1) von geringer Konsistenz des Klebstoffs entlang des äußeren Perimeterbands des Schuhwerkoberleders der Innensohle oder Sohle;
b) die Heissapplikation einer Schicht (2) von hoher Konsistenz des Klebstoffs entlang des konzentrischen Perimeterinnenbands, unmittelbar anschließend innerhalb der Schicht (1) des Klebers;
wobei die Arbeitsphasen a) und b) innerhalb einer ausreichend kurzen Zeitdauer durchgeführt werden, um sicherzustellen, daß weder Schicht (1) noch Schicht (2) merklich in den Abkühlungspozess eintritt, Schicht 1 erhalten wird, indem man eine Klebstoffmenge von geringer als oder gleich 5 g aufbringt, und Schicht (2) erhalten wird, indem man eine Klebstoffmenge von mehr als oder gleich 15 g aufbringt.

3. Verfahren gemäß Anspruch 1 oder 2, wobei der verwendete Klebstoff ein Schmelzkleber ist, der umfasst (Gewichtsprozente):
I) 95 bis 99,5% einer heterophasischen Zusammensetzung, umfassend
A) 20 bis 60% eines Polypropylenhomopolymeren mit einem Isotaktizitätsindex von größer als 80 (Gewichtsprozent der in siedendem n-Heptan unlöslichen Fraktion) oder eines oder mehrerer kristalliner Copolymere von Propylen mit Ethylen und/oder einem oder mehreren α-Olefinen mit 4 bis 10 Kohlenstoffatomen, enthaltend 80% oder mehr Propylen oder Mischungen der vorstehenden (Co)Polymeren;
B) 0 bis 25% eines in Xylol bei Raumtemperatur (25°C) unlöslichen Ethylencopolymeren;
C) 15 bis 80% einer Copolymerfraktion von Ethylen mit Propylen und/oder einem α-Olefin mit 4 bis 10 Kohlenstoffatomen und gegebenenfalls einem Dien, enthaltend 20 bis 60% Ethylen und in Xylol bei 25°C völlig löslich;
II. 0,5 bis 5% eines auf die Zusammensetzung (I) gepfropften polaren Monomeren.

## Revendications

1. Un procédé de collage d'éléments d'un article chaussant, comprenant l'application à chaud, sur les tiges, semelle intérieure ou semelle de l'article chaussant d'un adhésif fondu à chaud comprenant (en pourcentage en poids) :
I) de 95 % à 99,5 % d'une composition hétérophasique comprenant :
A) de 20 % à 60 % d'un homopolymère du propylène, ou d'un ou plusieurs copolymères cristallins du propylène, ou de mélanges de ces (co)polymères ;
B) 0 % à 25 % d'un copolymère de l'éthylène insoluble dans le xylène à la température ambiante (25°C) ;
C) de 15 % à 80 % d'une fraction de copolymère d'oléfine, soluble dans le xylène à 25°C ;
II) de 0,5 % à 5 % d'un monomère polaire, greffé sur la composition (I).

2. Le procédé selon la revendication 1, mis en oeuvre en utilisant des machines automatiques, comprenant les phases de fabrication suivantes effectuées soit successivement, soit simultanément :
a) application à chaud d'une couche de faible consistance (1) de l'adhésif le long de la bande périphérique extérieure de la tige, de la semelle intérieure ou de la semelle de l'article chaussant ;
b) application à chaud d'une couche de consistance épaisse (2) de l'adhésif le long de la bande périphérique intérieure concentrique directement à l'intérieur de la couche (1) d'adhésif;
les phases de fabrication a) et b) étant effectuées en un temps suffisamment court pour s'assurer que ni la couche (1), ni la couche (2) ne commencent pratiquement à subir un processus de refroidissement, la couche (1) étant obtenue par l'application d'une quantité d'adhésif inférieure ou égale à 5 g, et la couche (2) étant obtenue par l'application d'une quantité d'adhésif supérieure ou égale à 15 g.

3. Le procédé selon les revendications 1 et 2, dans lequel l'adhésif utilisé est un adhésif fondu à chaud comprenant (en pourcentage en poids) :
I) de 95 % à 99,5 % d'une composition hétérophasique comprenant :
A) de 20 % à 60 % d'un homopolymère de polypropylène ayant un indice isotactique supérieur à 80 (pourcentage en poids de la fraction insoluble dans le n-heptane à ébullition), ou un ou plusieurs copolymères cristallins de propylène avec de l'éthylène et/ou une plusieurs α-oléfines comportant 4 à 10 atomes de carbone, contenant 80 % ou davantage de propylène, ou d'un mélange de ces (co)polymères ;
B) 0 % à 25 % d'un copolymère d'éthylène insoluble dans le xylène à la température ambiante (25°C) ;
C) de 15 % à 80 % d'une fraction de copolymère d'éthylène et de propylène et/ou d'une α-oléfine comportant 4 à 10 atomes de carbone, et le cas échéant un diène, contenant 20 % à 60 % d'éthylène et totalement soluble dans le xylène à 25°C ;
II) de 0,5 % à 5 % d'un monomère polaire, greffé sur la composition (I).
